# EUROPÄISCHE PATENTSCHRIFT

(11) **EP 1 099 072 B1**
(45) Veröffentlichungstag und Bekanntmachung des Hinweises auf die Patenterteilung: **19.03.2003**
(21) Anmeldenummer: 99926186.0
(22) Anmeldetag: 17.06.1999
(51) Int. Cl.: F16L 1/038, B29C 47/02, E21D 11/04, F16L 55/26

(54) **VERFAHREN UND VORRICHTUNG ZUM VERLEGEN EINER UNTERIRDISCHEN ROHRLEITUNG AUS KUNSTSTOFF**
METHOD AND DEVICE FOR LAYING AN UNDERGROUND DUCT MADE OF A PLASTIC MATERIAL
PROCEDE ET DISPOSITIF POUR POSER UNE CONDUITE SOUTERRAINE EN MATIERE PLASTIQUE

(30) Priorität: 17.07.1998 AT 123698
(43) Veröffentlichungstag der Anmeldung: 16.05.2001
(73) Patentinhaber: Landrichter, Wolfgang, 4840 Vöcklabruck (AT)
(72) Erfinder: Landrichter, Wolfgang, 4840 Vöcklabruck (AT)
(74) Vertreter: Hübscher, Helmut, Dipl.-Ing.
(86) Internationale Anmeldenummer: AT9900157
(87) Internationale Veröffentlichungsnummer: WO00004314

(56) Entgegenhaltungen:
- DE-C- 3 317 025
- US-A- 3 349 568
- US-A- 4 652 174
- US-A- 4 915 541

## Beschreibung

Die Erfindung bezieht sich auf ein Verfahren zum Verlegen einer unterirdischen Rohrleitung aus Kunststoff, nach dem ein Bodenkanal gebohrt und die Rohrleitung in den Bodenkanal eingebracht wird, wobei die aus einer aushärtenden Kunststoffmasse bestehende Rohrleitung gleichzeitig mit dem Einbringen in den Bodenkanal hergestellt wird, indem die aufbereitete Kunststoffmasse innerhalb des Bodenkanals fortschreitend als Rohrstrang ausgeformt und aushärten gelassen wird, sowie auf eine Vorrichtung zum Durchführen dieses Verfahrens.

Zum Herstellen von Bodenkanälen für das unterirdische Verlegen von Rohrleitungen sind bereits verschiedene Bohrverfahren, sogenannte Horizontalbohrverfahren, bekannt, bei denen meist eine Bohrspülung und ein verlaufsgesteuerter Bohrkopf eingesetzt werden. Diese Verfahren, die mit ausreichender Richtungsgenauigkeit das Bohren entsprechender Bodenkanäle längs eines durch die Planvorgabe vorbestimmten Leitungsverlaufes erlauben, haben sich bewährt, da sie mit einem Minimum an notwendigen Grabungsarbeiten das Verlegen von Ver- und Entsorgungsleitungen im Untertageverfahren ermöglichen. Das eigentliche Verlegen der Rohrleitung erfolgt dann durch Einziehen eines aus einzelnen Rohrschüssen im Maße des Einziehvorganges zusammengesetzten Rohrstranges in den Bodenkanal, was verhältnismäßig aufwendig und zeitraubend ist und große Manipulationsgruben und -flächen erfordert. Außerdem muß der Ringspalt zwischen der äußeren Rohrstrangoberfläche und der Bodenkanalinnenfläche in Abhängigkeit von der Verbindungstechnologie der einzelnen Rohrschüsse und den vorbestimmten Verlegelängen entsprechend groß gewählt werden, wodurch der Bodenkanaldurchmesser bis zum Doppelten des Rohrstrangaußendurchmessers zu dimensionieren ist.

Um diese Nachteile zu vermeiden, wurde bereits zum Verlegen unterirdischer Rohrleitungen aus Kunststoff vorgeschlagen (US 4 652 174 A, US 3 349 568 A), die aus getrennt zugeführten Komponenten aufbereitete Kunststoffmasse in den Bodenkanal einzubringen und aushärten zu lassen, so daß die Rohrleitung innerhalb des Bodenkanals fortschreitend als Rohrstrang ausgeformt wird. Die Herstellung der Rohrleitung erfolgt dabei in einem Arbeitsgang mit dem Ausbruch des Bodenkanals, was aufwendige, voneinander abhängige Maschinen einerseits einerseits aus einer Vortriebseinheit und anderseits aus einer Rohrformungseinheit bedingt. Zu diesem Zweck wird an die Vortriebseinheit eine mit der Kanalwandung als Außenform zusammenwirkende Innenform angesetzt, wobei sich die zwischen diese Innen- und Außenform eingebrachte Kunststoffmasse mit der Kanalwandung kraft- und formschlüssig verbindet. Nachteilig bei auf diese Weise hergestellten Rohrleitungen ist allerdings, daß keine gleichmäßige Wanddicke sichergestellt werden kann, was die Gefahr von die Dichtheit und Festigkeit der Rohrleitung beeinträchtigenden Dünnstellen der Rohrwandung mit sich bringt. Außerdem muß davon ausgegangen werden, daß Bodenbewegungen wegen der innigen Verbindung zur Wandung des Bodenkanals auf die Rohrleitung übertragen werden, wodurch eine erhebliche Beschädigungsgefahr für die Rohrleitung besteht.

Der Erfindung liegt daher die Aufgabe zugrunde, ein Verfahren zum Verlegen einer unterirdischen Rohrleitung aus Kunststoff der eingangs geschilderten Art so auszugestalten, daß die notwendige Dichtheit und Festigkeit für die Rohrleitung sichergestellt und die Gefahr von Leitungsbeschädigungen zufolge von Bodenbewegungen weitgehend ausgeschlossen werden kann.

Die Erfindung löst diese Aufgabe dadurch, daß zuerst der Bodenkanal gebohrt und dann die Rohrleitung in den fertiggestellten Bodenkanal eingebracht wird und daß der Rohrstrang innerhalb des Bodenkanals unter Freihaltung eines Ringspaltes gegenüber der Bodenkanalwandung zum Hinterfülten mit Stützflüssigkeit ausgeformt wird.

Durch voneinander getrennte Arbeitsgänge einerseits für das Vortreiben des Bodenkanals und anderseits für die Ausformung des Rohrstranges können die für diese Verfahrensschritte jeweils günstigsten Maschinen und Vorrichtungen voneinander unabhängig eingesetzt werden, was einfache Verlegebedingungen schafft. Die Ausbildung eines Ringspaltes zwischen der Bodenkanalwandung und dem ausgeformten Rohrstrang ermöglicht die Fertigung einer Rohrleitung mit gleichmäßiger Wanddicke als Voraussetzung für eine gleichmäßige Güte des Rohrstranges über die gesamte Länge der Rohleitung. Außerdem verhindert der Ringspalt nicht nur eine Übertragung von Bodenbewegungen auf den Rohrstrang, sondern bietet den zusätzlichen Vorteil einer Hinterfüllung des Rohrstranges mit Stützflüssigkeit, so daß sich über die Einbettung des Rohrstranges in die den Ringspalt ausfüllende Stützflüssigkeit eine vorteilhafte Belastungsverteilung ergibt, die die Beschädigungsgefahr weiter herabsetzt.

Um dieses Verlegeverfahren rationell durchführen zu können, ist ein durch den Bodenkanal hindurchziehbarer Reaktor aus einer vorderen, radial auswärts abstehende Führungskufen oder einen Führungsring aufweisenden Reaktortrommel und einem hinteren doppelmanteligen Kalibrierzylinder vorgesehen, wobei Reaktortrommel und Kalibrierzylinder zueinander koaxial und relatiwerdrehbar angeordnet sind und in den Reaktorraum der Reaktortrommel Zuleitungen für die Zufuhr von Kunststoffmasse oder deren Komponenten ausmünden und der Reaktorraum über einen Düsenring mit dem vom hinten offenen Doppelmantel des Kalibrierzylinders gebildeten Kalibrierraum in Verbindung steht. Der Reaktor wird zum Verlegen der Rohrleitung durch den vorgefertigten Bodenkanal hindurchgezogen, wozu Einrichtungen der Horizontalbohrtechnik, wie Bohrgestänge und Räumkopf, Verwendung finden können. Während des Durchziehens werden über geeignete Zuleitungen die Kunststoffmasse oder deren Komponenten in den Reaktorraum der vorderen Reaktortrommel eingebracht, wo die aushärtbare Kunststoffmasse vermischt wird, die dann durch den Düsenring in den Kalibrierraum des Kalibrierzylinders eindringt. Im Kalibrierraum wird die Kunststoffmasse fortlaufend zum Rohrstrang ausgeformt, der im Maße des Durchziehens des Reaktors hinten aus dem Kalibrierzylinder auswandert und innerhalb des Bodenkanals zur Rohrleitung aushärtet. Durch die Relativverdrehbarkeit der Reaktortrommel gegenüber dem Kalibrierzylinder bleibt der Kalibrierzylinder trotz einer Reaktortrommeldrehung innerhalb des Bodenkanals drehfest, so daß es zu keiner Verwindung des ausgeformten Rohrstranges kommt. Durch das Vorsehen radial auswärts abstehender Führungskufen oder eines Führungsringes der Reaktortrommel kommt es beim Durchziehen des Reaktors durch den Bodenkanal zu einer zentrierenden Führung der Reaktortrommel und des anschließenden Kalibrierzylinders innerhalb des Bodenkanals, so daß der ausgeformte Rohrstrang unter Ausbildung eines Ringspaltes gegenüber der Kanalwandung im Bodenkanal verlegt wird, welcher Ringspalt dabei mit Spül- oder Stützflüssigkeit befüllt werden kann.

Um die Aufbereitung der Kunststoffmasse zu verbessern und eine durchgreifende Vermischung der zugeführten Kunststoffkomponenten zu erreichen, kann die beim Durchziehen des Reaktors durch den Bodenkanal drehbare Reaktortrommel in den Reaktorraum vorragende Mischwerkzeuge aufweisen.

Nach einer weiteren Ausgestaltung kann dem Reaktor ein lösbar am Kalibrierzylinder ansetzbares Endstück zugeordnet werden. Dieses den Kalibrierraum abschließende und eine Entlüftungseinrichtung aulweisende Endstück ist im Eingangsbereich des Bodenkanals drehfest verankerbar. Das Endstück erleichtert den Beginn der Rohrstrangausformung, da es anfangs den Kalibrierraum verschließt und beim Einziehen des Reaktors in den Bodenkanal am Kanaleingang drehfest und in der richtigen Höhenlage verankert werden kann. Durch Beaufschlagung des Reaktorraumes mit Kunststoffkomponenten kann die Kunststoffmasse aufbereitet und durch Erhöhung des Beaufschlagungsdruckes in den Kalibrierraum gepreßt werden, bis der Austritt der Kunststoffmasse aus der Entlüftungseinrichtung die vollkommene Befüllung des Kalibrierraumes mit Kunststoffmasse anzeigt. Danach kann die Verbindung des Endstückes mit dem Reaktor gelöst und der Reaktor durch den Bodenkanal hindurchgezogen werden, wobei der Rohrstrang fortlaufend ausgeformt wird, der mit seinem Anfang im Endstück steckt und über das Endstück drehfest verankert bleibt, was eine Rohrstrangverdrehung sicher verhindert. Außerdem läßt sich über die Lage des Endstükes die projektgemäß erforderliche Höhenlage des Rohrstranges bzw. der Rohrleitung geodätisch exakt einrichten.

Um das Ausformen des Rohrstranges bzw. den Aushärtvorgang beeinflussen zu können, ist der Doppelmantel des Kalibrierzylinders beheizbar. Zu diesem Zweck kann der Doppelmantel innen und/oder außen und entlang der gesamten Länge oder nur in Teilbereichen mit geeigneten Heizeinrichtungen versehen sein, über die die zum Rohrstrang ausgeformte Kunststoffmasse wärmebehandelt wird. Durch entsprechende Isoliermaßnahmen kann ein Wärmeübergang vom Kalibrierzylinder auf die Reaktortrommel einfach verhindert werden.

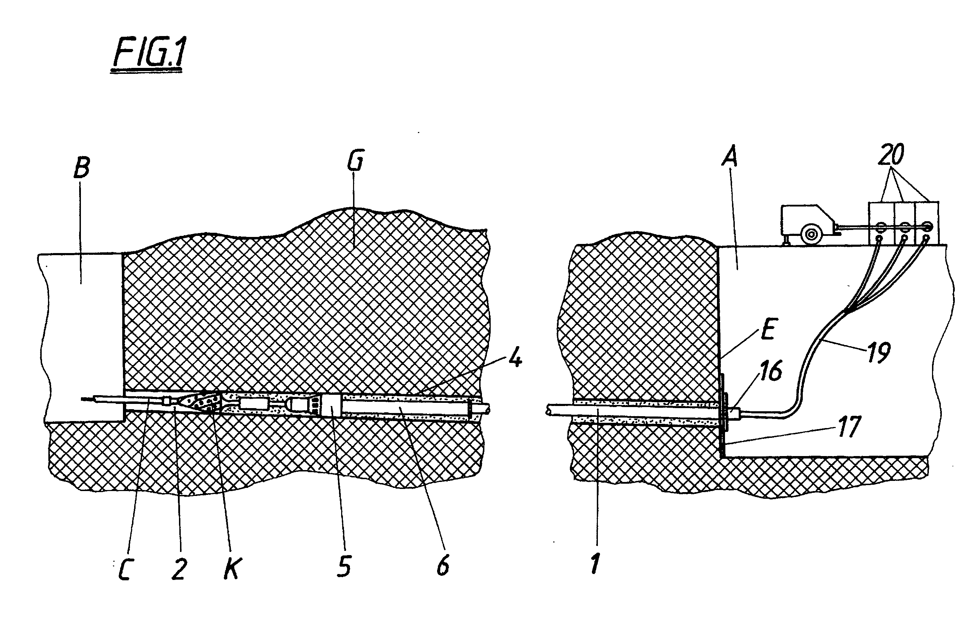

In der Zeichnung ist der Erfindungsgegenstand rein schematisch veranschaulicht, und zwar zeigen
- Fig. 1: eine erfindungsgemäße Vorrichtung zum Verlegen einer unterirdischen Rohrleitung in einem Anlagenschema,

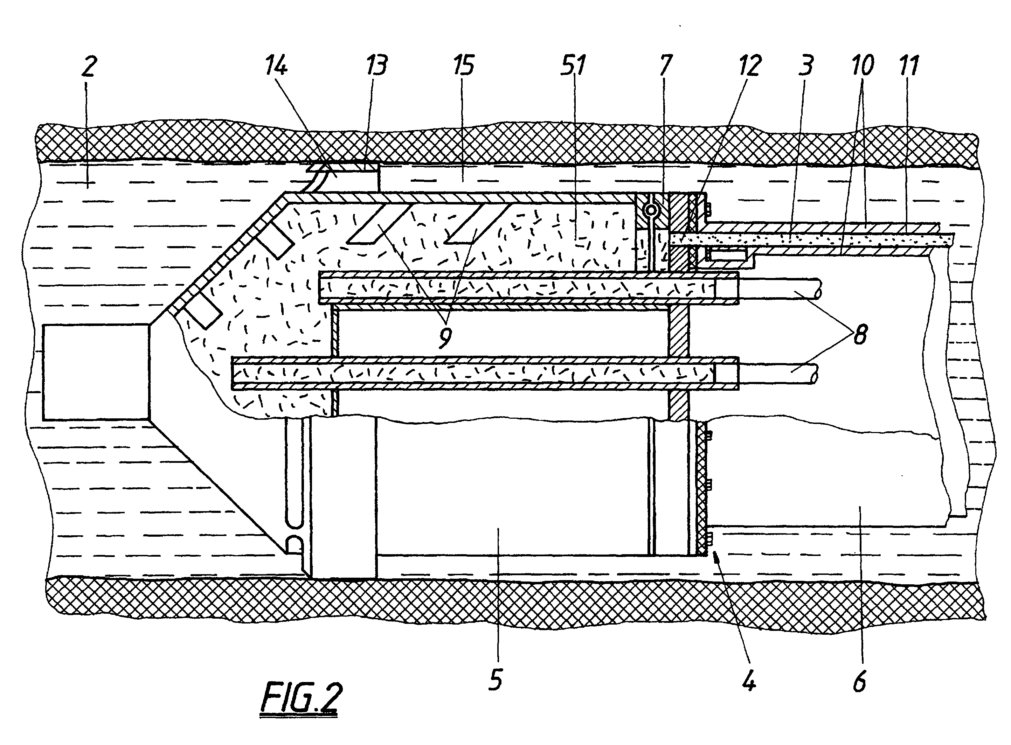

- Fig. 2: den Reaktor der erfindungsgemäßen Vorrichtung im Axialschnitt größeren Maßstabes und

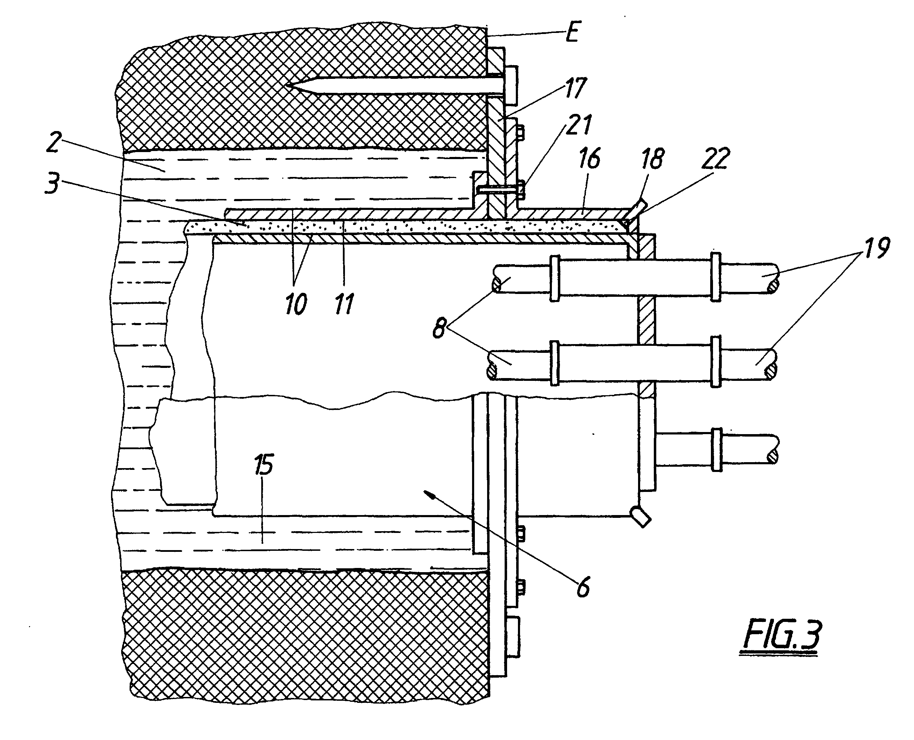

- Fig. 3: einen Teil des Reaktors in Ausgangsposition bei Beginn einer Rohrleitungsverlegung ebenfalls im Axialschnitt.

Um auf rationelle Weise eine unterirdische Rohrleitung 1 verlegen zu können, wird zuerst entlang des Leitungsverlaufes ein Bodenkanal 2 gebohrt, welcher Bodenkanal beispielsweise im Gelände G von einer Startgrube A aus zu einer Zielgrube B mit Hilfe eines gesteuerten Horizontal-Spülbohrverfahrens oder eines spülungsunterstützten Horizontalbohrverfahrens gebohrt wird. Nach dem Fertigstellen des Bodenkanals wird dann die Rohrleitung 1 in den Bodenkanal 2 eingebracht, wozu die aus einer aushärtenden Kunststoffmasse bestehende Rohrleitung gleichzeitig mit dem Einbringen in den Bodenkanal hergestellt wird, indem die aufbereitete Kunststoffmasse innerhalb des Bodenkanals fortschreitend als Rohrstrang 3 ausgeformt und aushärten gelassen wird.

Dazu ist ein Reaktor 4 vorgesehen, der über die vorhandenen Bohrgeräte der Bodenkanalherstellung, beispielsweise über ein Bohrgestänge C und einen Aufweitkopf K, von der Startgrube A durch den Bohrkanal 2 zur Zielgrube B gezogen wird. Dieser Reaktor 4 setzt sich aus einer vorderen Reaktortrommel 5 und einem hinteren Kalibrierzylinder 6 zusammen, wobei Reaktortrommel 5 und Kalibrierzylinder 6 koaxial angeordnet und über einen Lagerring 7 relativverdrehbar, aber zugfest miteinander verbunden sind, so daß beim Durchziehen des Reaktors 5 durch den Bodenkanal 2 aufgrund einer Bohrgestängedrehung nicht nur der Aufweitkopf K, sondem mit ihm auch die Reaktortrommel 3, aber nicht der Kalibrierzylinder 6 verdreht werden.

Die Reaktortrommel 5 weist einen Reaktorraum 51 auf, in den Zuleitungen 8 für die Zufuhr von Kunststoffkomponenten ausmünden, und ist mit in den Reaktorraum vorragenden Mischwerkzeugen 9 ausgerüstet. Der Kalibrierzylinder 6 weist einen vorzugsweise beheizbaren Doppelmantel 10 zur Ausbildung eines Kalibrierraumes 11 auf, der über einen Düsenring 12 an den Reaktorraum 51 anschließt. Werden daher über die Zuleitungen 8 in den Reaktorraum 51 die zur Aufbereitung der Kunststoffmasse für die Herstellung der Rohrleitung erforderlichen Komponenten eingebracht, lassen sich diese Komponenten über die Mischwerkzeuge 9 vermischen und zur gewünschten Kunststoffmasse aufbereitet. Diese Masse wird dann in Abhängigkeit einer weiteren Druckbeaufschlagung über die Zuleitungen 8 durch den Düsenring 12 in den Kalibrierraum 11 eingepreßt, wo sie zum Rohrstrang 3 ausgeformt wird und während des Durchziehens des Reaktors durch den Bodenkanal beim gleichzeitigen Herauswandern aus dem Kalibrierraum aushärtet, so daß eine im Bodenkanal 2 liegende Rohrleitung 1 entsteht.

Zur Führung des Reaktors 4 gegenüber dem Bodenkanal 2 ist die Reaktortrommel 5 mit einem äußeren Führungsring 13 ausgestattet, mit denen der Reaktor der Kanalwandung entlanggleitet, wobei innerhalb des Ringes Spülöffnungen 14 freigelassen sind, damit über den Aufweitkopf od. dgl. in den Bodenkanal eingefüllte Spülflüssigkeit in den Ringraum 15 zwischen Rohrstrang 3 und Bodenkanal 2 eindringen kann.

Bei Beginn der Rohrverlegung ist am freien Kalibrierzylinderende ein Endstück 16 lösbar angesetzt, das den Kalibrierraum 11 abschließt und über einen Ringflansch 17 im Eingangsbereich E des Bodenkanals drehfest verankert werden kann. Dieses Endstück 16 weist eine Entlüftungseinrichtung 18 als eine Art Luftschleuse für den Kalibrierraum des Kalibrierzylinders auf. Ist der Reaktor zusammengestellt und am Aufweitkopf K angekuppelt, kann der Reaktor bis zum Anschlag des Ringflansches 17 an der Stirnwand der Startgrube A in den Bodenkanal eingezogen werden. Nun wird der Ringflansch über Erdnägel im Eingangsbereich E drehfest und in entsprechender Höhenlage fixiert und die Zuleitungen 8 können über Druckschläuche 19 an die vorbereiteten Druckbehälter 20 für die Kunststoffkomponenten angeschlossen werden. Durch eine Druckbeaufschlagung dieser Behälter lassen sich diese Komponenten über die Druckschläuche 19 und die Zuleitungen 8 in den Reaktorraum 51 einpressen, wo sie aufgrund der Trommeldrehung vermischt werden und als Kunststaffmasse in den Kalibrierraum 11 des Kalibrierzylinders 6 eindringen. Sobald die Kunststoffmasse aus der Entlüftungseinrichtung 18 austritt, ist der Kalibrierraum voll mit Kunststoffmasse ausgefüllt, worauf das Endstück 16 vom Kalibrierzylinder, beispielsweise durch Öffnen der Verschraubung 21, gelöst und der gesamte Reaktor im Maße des Rohrstrangausformens durch den Bodenkanal gezogen wird. Dabei fixiert das Endstück den entstehenden Rohrstrang mit Hilfe von Knotenblechen 22 drehfest gegenüber dem Bodenkanal, so daß es zu keiner Verwindung kommt. Die Rohrleitung 1 wird somit in einem Durchgang kontinuierlich in den Bodenkanal 2 eingebracht.

Weist die Reaktortrommel radial auswärts abstehende Führungskufen oder einen Führungsring auf, kommt es beim Durchziehen des Reaktors durch den Bodenkanal zu einer zentrierenden Führung der Reaktortrommel und des anschließenden Kalibrierzylinders, so daß der ausgeformte Rohrstrang unter Ausbildung eines möglichst gleichmäßigen Ringspaltes gegenüber der Kanalwandung im Bodenkanal verlegt wird, welcher Ringspalt dabei mit Spül- oder Stützflüssigkeit befüllt werden kann.

## Patentansprüche

1. Verfahren zum Verlegen einer unterirdischen Rohrleitung aus Kunststoff, nach dem ein Bodenkanal gebohrt und die Rohrleitung in den Bodenkanal eingebracht wird, wobei die aus einer aushärtenden Kunststoffmasse bestehende Rohrleitung gleichzeitig mit dem Einbringen in den Bodenkanal hergestellt wird, indem die aufbereitete Kunststoffmasse innerhalb des Bodenkanals fortschreitend als Rohrstrang ausgeformt und aushärten gelassen wird, **dadurch gekennzeichnet, daß** zuerst der Bodenkanal gebohrt und dann die Rohrleitung in den fertiggestellten Bodenkanal eingebracht wird und daß der Rohrstrang innerhalb des Bodenkanals unter Freihaltung eines Ringspaltes gegenüber der Bodenkanalwandung zum Hinterfüllen mit Stützflüssigkeit ausgeformt wird.

2. Vorrichtung zum Durchführen des Verfahrens nach Anspruch 1, **dadurch gekennzeichnet, daß** ein durch den Bodenkanal (2) hindurchziehbarer Reaktor (4) aus einer vorderen, radial auswärts abstehende Führungskufen oder einen Führungsring (13) aufweisenden Reaktortrommel (5) und einem hinteren doppelmanteligen Kalibrierzylinder (6) vorgesehen ist, wobei Reaktortrommel (5) und Kalibrierzylinder (6) zueinander koaxial und relativverdrehbar angeordnet sind und in den Reaktorraum (51) der Reaktortrommel (5) Zuleitungen (8) für die Zufuhr von Kunststoffmasse oder deren Komponenten ausmünden und der Reaktorraum (51) über einen Düsenring (12) mit dem vom hinten offenen Doppelmantel (10) des Kalibrierzylinders (6) gebildeten Kalibrierraum (11) in Verbindung steht.

3. Vorrichtung nach Anspruch 2, **dadurch gekennzeichnet, daß** die beim Durchziehen des Reaktors (4) durch den Bodenkanal (2) drehbare Reaktortrommel (5) in den Reaktorraum (51) vorragende Mischwerkzeuge (9) aufweist.

4. Vorrichtung nach Anspruch 2 oder 3, **dadurch gekennzeichnet, daß** dem Reaktor (4) ein lösbar am Kalibrierzylinder (6) ansetzbares Endstück (16) zugehört, welches den Kalibrierraum (11) abschließende, eine Entlüftungseinrichtung (18) aufweisende Endstück (16) im Eingangsbereich (E) des Bodenkanals (2) drehfest verankerbar ist.

5. Vorrichtung nach einem der Ansprüche 2 bis 4, **dadurch gekennzeichnet, daß** der Doppelmantel (10) des Kalibrierzylinders (6) unter Isolierung zur Reaktortrommel (5) beheizbar ist.

## Claims

1. A method of laying an underground pipeline of plastic, wherein a channel is drilled in the ground and the pipeline is introduced into the ground channel, the pipeline, which consists of a thermosetting plastic, being made simultaneously with the introduction into the ground channel, by the prepared plastic material being progressively formed as a tubular string inside the ground channel and left to set, **characterised in that** the ground channel is first drilled and then the pipeline is introduced into the prepared ground channel and **in that** the tubular string is formed inside the ground channel, an annular gap being left free from the wall of the ground channel for filling with support liquid.

2. Apparatus for performing the method according to claim 1, **characterised in that** a reactor (4) which is adapted to be pulled through the ground channel (2) is provided, consisting of a front reactor drum (5) having radially outwardly projecting guide skids or a guide ring (13), and of a rear double-jacket calibration cylinder (6), the reactor drum (5) and the calibration cylinder (6) being disposed so as to be coaxial to one another and relatively rotatable, and supply lines (8) for the supply of plastic material or the components thereof lead into the reactor chamber (51) of the reactor drum (5) and the reactor chamber (51) communicates via a nozzle ring (12) with the calibration chamber (11) formed by the double jacket (10) of the calibration cylinder (6), which double jacket is open at the rear.

3. Apparatus according to claim 2, **characterised in that** the reactor drum (5), which is rotatable when the reactor (4) is pulled through the ground channel (2), comprises mixing tools (9) projecting into the reactor chamber (51).

4. Apparatus according to claim 2 or 3, **characterised in that** associated with the reactor (4) is an end part (16) which is adapted to be detachably attached to the calibration cylinder (6) and which end part (16), which shuts off the calibration chamber (11) and comprises a venting device (18), is adapted to be anchored non-rotatably in the entry zone (E) of the ground channel (2).

5. Apparatus according to any one of claims 2 to 4, **characterised in that** the double jacket (10) of the calibration cylinder (6) is heatable and is insulated from the reactor drum (5).

## Revendications

1. Procédé de pose d'une conduite souterraine en matière plastique, selon lequel on perce un canal souterrain et la conduite est introduite dans le canal souterrain, la tuyauterie formée d'une masse synthétique durcissante est produite simultanément à l'introduction dans le canal souterrain, par le fait que la masse synthétique préparée est laissée se former sous forme de boudin tubulaire à l'intérieur du canal souterrain et est laissée se durcir, **caractérisé en ce que** d'abord le canal souterrain est percé, puis la conduite est introduite dans le canal souterrain achevé et le boudin tubulaire est formé à l'intérieur du canal souterrain en laissant libre un intervalle annulaire par rapport à la paroi de canal souterrain pour remplir en aval par un liquide de soutien.

2. Dispositif de mise en oeuvre du procédé selon la revendication 1, **caractérisé en ce qu'**un réacteur (4), pouvant être tiré à travers le canal souterrain (2), réacteur formé d'un tambour de réacteur (5) avant, présentant des patins de guidage avant faisant saillie radialement à l'extérieur ou bien un anneau de guidage (13), et d'un cylindre de calibrage (6) en aval à enveloppe double, le tambour de réacteur (5) et le cylindre de calibrage (6) étant disposés coaxialement l'un par rapport à l'autre et de façon à pouvoir tourner l'un par rapport à l'autre, et des conduites d'alimentation (8), pour amener de la masse synthétique ou bien leurs composants, débouchant dans l'enceinte de réacteur (51) du tambour de réacteur (5), et l'enceinte de réacteur (51) étant reliée par l'intermédiaire d'une bague à buses (12) à l'enceinte de calibrage (11) formée par l'enveloppe double (10), ouverte vers l'arrière, du cylindre de calibrage (6).

3. Dispositif selon la revendication 2, **caractérisé en ce que** le tambour de réacteur (5), pouvant tourner à travers le canal souterrain (2) lorsque l'on fait passer le réacteur (4), présente des outils de mélange (9) faisant saillie dans l'enceinte de réacteur (51).

4. Dispositif selon la revendication 2 ou 3, **caractérisé en ce qu'**appartient au réacteur (4) une pièce d'extrémité (16) pouvant être rapportée de façon désolidarisable sur le cylindre de calibrage (6), ladite pièce d'extrémité (16), fermant l'enceinte de calibrage (11), présentant un dispositif de désaération (18), étant susceptible d'être ancrée, en étant bloquée en rotation, dans la zone d'entrée (E) du canal souterrain (2).

5. Dispositif selon l'une des revendications 2 à 4, **caractérisé en ce que** l'enveloppe double (10) du cylindre de calibrage (6) est susceptible d'être chauffée avec isolation par rapport au tambour de réacteur (5).
